# EUROPÄISCHE PATENTANMELDUNG

(11) **EP 2 952 839 A1**
(43) Veröffentlichungstag der Anmeldung: **09.12.2015**
(21) Anmeldenummer: 15169868.5
(22) Anmeldetag: 29.05.2015
(51) Int. Cl.: F25D 23/02, F25D 23/08

(54) **TÜR FÜR EIN HAUSHALTSGERÄT SOWIE HAUSHALTSGERÄT**

(30) Priorität: 03.06.2014 DE 102014210472
(71) Anmelder: BSH Hausgeräte GmbH, 81739 München (DE)
(72) Erfinder: Ehninger, Christian, 89537 Giengen an der Brenz (DE); Seelmeier, Michael, 73572 Heuchlingen (DE); Stelzer, Jörg, 89537 Giengen (DE)

(57) **Zusammenfassung**

Die Erfindung betrifft eine Tür (7) für ein Haushaltsgerät (1), insbesondere ein Haushaltskältegerät, aufweisend einen evakuierten Hohlraum (26), der durch eine Innenwand (10), eine Außenwand (12) sowie einen sowohl mit der Innenwand (10) als auch mit der Außenwand (12) vakuumdicht verbundenen Rahmen (9) gebildet ist. Um eine hohe thermische Isolationswirkung sowie eine einfache und kostengünstige Herstellung der Tür (7) zu ermöglichen, ist vorgesehen, dass an dem Rahmen (9) eine Dichtungsanordnung (14) angeordnet ist.

## Beschreibung

Die Erfindung betrifft eine Tür für ein Haushaltsgerät, insbesondere ein Haushaltskältegerät, aufweisend einen evakuierten Hohlraum, der durch eine Innenwand, eine Außenwand sowie einen sowohl mit der Innenwand als auch mit der Außenwand vakuumdicht verbundenen Rahmen gebildet ist.

Haushaltsgeräte, insbesondere Haushaltskältegeräte wie z.B. Kühlschränke, Gefrierschränke oder Kühl-Gefrier-Kombinationen, weisen typischerweise einen Innenraum auf, in welchem z.B. bei Haushaltskältegeräten das zu lagernde Kühl- und/oder Gefriergut aufbewahrt wird. Der Innenraum kann dabei typischerweise durch eine schwenkbar an dem Korpus gelagerte Tür geschlossen bzw. geöffnet werden.

Aus der DE 10 2009 002 800 A1 ist eine wärmeisolierende Wandung eines Haushaltskältegerätes, insbesondere ein Tür desselbigen, bekannt, aufweisend eine erste Haut und eine zweite Haut, die an ihren Rändern zumindest weitgehend luftdicht miteinander fest verbunden sind und einen evakuierten Hohlraum einschließen. Gemäß einer Ausführungsform der DE 10 2009 002 800 A1 ist vorgesehen, an einer einem Korpus des Haushaltskältegerätes zugewandten Seite der ersten Haut des Türblattes eine, insbesondere rahmenförmige, Dichtung, beispielsweise aus Gummi, zu befestigen.

Die Aufgabe der vorliegenden Erfindung ist es, eine gattungsgemäße Tür bereitzustellen, welche eine hohe thermische Isolationswirkung aufweist sowie einfach und kostengünstig herzustellen ist.

Diese Aufgabe wird erfindungsgemäß gelöst, indem bei einer eingangs erwähnten Tür vorgesehen wird, dass an dem Rahmen eine Dichtungsanordnung angeordnet ist.

Erfindungsgemäß vereint der Rahmen somit mehrere Funktionen in sich. Indem der Rahmen vakuumdicht sowohl mit der Innenwand als auch mit der Außenwand verbunden ist, trägt der Rahmen zur Ausbildung des evakuierten Hohlraumes direkt bei und ein von dem Rahmen umschlossener, evakuierter Hohlraum kann maximiert werden. Indem die Dichtungsanordnung am Rahmen angeordnet ist, entsteht einerseits eine sehr einfach und kostengünstig zu fertigende Tür, da mögliche Aufnahmen zur Anordnung der Dichtungsanordnung direkt bei der Herstellung des Rahmens bzw. Rahmeneinzelteile des Rahmens eingebracht werden können, vorzugsweise in einem einzigen Fertigungsschritt. Andererseits ermöglicht die Anordnung der Dichtungseinheit am Rahmen eine sehr genaue Positionierung der selbigen, da die Fertigungsgenauigkeit des Rahmens und damit auch die Positionierungsgenauigkeit der Dichtungsanordnung auf ein höheres Maß gebracht werden kann, als dies beispielsweise bei der Innenwand der Fall wäre. Die höhere Positionierungsgenauigkeit der Dichtungsanordnung führt letztendlich zu einer Verbesserung der wärmedämmenden Eigenschaft der Tür. Darüber hinaus, kann bei einer Anordnung der Dichtungsanordnung am Rahmen der selbige massiver ausgeführt werden, insbesondere sich weiter in den durch den Rahmen umschlossenen Bereich erstrecken, so dass die strukturelle Festigkeit der Tür erhöht werden kann.

Zwar ist es grundsätzlich möglich, dass die Innenwand, die Außenwand und der Rahmen jeweils für sich genommen aus einem oder mehreren Einzelteil(en) besteht bzw. bestehen; in jedem Fall handelt es sich bei der Innenwand, der Außenwand und dem Rahmen jedoch um drei separate Bauteile. Erst nach dem Verbinden des Rahmens mit sowohl der Innenwand als auch der Außenwand entsteht eine, vorzugsweise nicht zerstörungsfrei lösbare, Baueinheit dieser drei Bauteile.

Bei bestimmungsgemäßer Anordnung der Tür an einem Haushaltsgerät weist die Innenwand bei geschlossenem Tür in Richtung eines Lagerraumes des Haushaltsgerätes und verschließt insbesondere eine Öffnung des Lagerraumes, während die Außenwand dem Lagerraum abgewandt ist. Zwar ist es grundsätzlich möglich, dass ausgehend von dem Hohlraum hinter der Innenwand eine weitere Isolationsschicht und/oder Wandung der Tür angeordnet ist. Vorzugsweise jedoch bildet die Innenwand eine die einsatzbereite Tür abschließende Wandung, bildet also bei einer montierten Tür die abschließende Wand der Tür gegenüber dem Lagerraum. Gleichermaßen kann, wiederum ausgehend von dem Hohlraum, hinter der Außenwand eine weitere Isolationsschicht und/oder Wandung an der Tür angeordnet werden. Oder aber die Außenwand bildet eine die Tür abschließende Wand, ist also bei montierter Tür von einem Benutzer direkt sichtbar.

Die Dichtungsanordnung erfüllt den Zweck, eine Dichtung zwischen der Tür und einem die Tür tragenden Korpus eines Haushaltsgerätes bereitzustellen. Bei bestimmungsgemäßer Anordnung der Tür an einem Haushaltsgerät kontaktiert die Dichtungsanordnung daher bei geschlossener Tür den Korpus, beispielsweise an einem eine Öffnung des Lagerraumes umgebenden Korpusrahmen.

Durch den evakuierten Hohlraum weist die Tür eine wärmeisolierende Wirkung auf. Vorzugsweise befindet sich im dem Hohlraum ein Stützkörper, der einem luftdruckbedingten Zusammendrücken von Innenwand und Außenwand entgegenwirkt. Die vakuumdichte Verbindung des Rahmens mit sowohl der Innenwand als auch der Außenwand verhindert dabei dauerhaft das Eindringen von gasförmigen Stoffen, wie Sauerstoff, CO2 oder Wasserdampf, in den Hohlraum.

Vorzugsweise ist der Rahmen geschlossen. Aufgrund der üblicherweise rechteckigen Öffnung des Lagerraumes eines Haushaltsgeräts, insbesondere Haushaltskältegeräts, weist der Rahmen vorzugsweise eine rechteckige Gestalt auf. Vorzugsweise wird der rechteckige, durch den Rahmen eingefasste Bereich durch die ebenfalls rechteckigen Außenformen aufweisende Innenwand und Außenwand geschlossen.

Bevorzugte Ausführungsformen sind in den Unteransprüchen angegeben.

Grundsätzlich ist es möglich, dass die Dichtungsanordnung einstückig mit dem Rahmen ausgebildet bzw. einstückig an mehreren Rahmeneinzelteilen ausgebildet ist. So könnte beispielsweise der Rahmen bzw. die Rahmeneinzelteile inklusive der Dichtungsanordnung aus Kunststoff bestehen und mittels einem Coextrusionsverfahren oder einem Zweikomponentenspritzgußverfahren hergestellt werden. Vorzugsweise ist jedoch vorgesehen, dass der Rahmen bzw. die Rahmeneinzelteile einerseits und die Dichtungsanordnung andererseits separate Einzelteile darstellen.

Gemäß einer Ausführungsform ist vorgesehen, dass der Rahmen eine Aufnahme, insbesondere eine Nut, zum formschlüssigen und/oder kraftschlüssigen Aufnehmen der Dichtungsanordnung aufweist. Die Dichtungsanordnung kann einen Fuß aufweisen, der bei einer Montage der Tür in die Aufnahme eingesetzt wird.

Gemäß einer Ausführungsform ist vorgesehen, dass die Aufnahme als eine über den Rahmen umlaufend geschlossene Nut ausgebildet ist oder dass die Aufnahme durch mehrere separate, insbesondere zwei vertikal und zwei horizontal verlaufende, Nuten gebildet ist.

Unabhängig von der Art der Anordnung der Dichtungsanordnung an dem Rahmen umfasst selbige vorzugsweise einen geschlossenen, z.B. rechteckförmigen, Ring, vorzugsweise bestehend aus Elastomer und/oder umfassend eine oder mehrere Hohlkammern. Gegebenenfalls kann in einer Hohlkammer ein Magnet eingesetzt sein, um einen sicheren Kontakt zu einem magnetisch wechselwirkenden Korpusteil zu gewährleisten. Der, z.B. im Wesentlichen rechteckförmige, Ring kann aus einem Einzelteil bestehen, welches beispielsweise extrudiert und an seinen beiden Enden verbunden wurde. Alternativ kann der Ring aus mehreren, z.B. vier insbesondere rechteckförmig angeordneten, Dichtungselementen bestehen, die wiederum jeweils an Enden mit benachbarten Dichtungselementen verbunden sind.

Erfindungsgemäß wird der evakuierte Hohlraum dadurch gebildet, dass der Rahmen mit sowohl der Innenwand als auch der Außenwand vakuumdicht verbunden wird. Insbesondere ist keine direkte vakuumdichte Verbindung zwischen Innenwand und Außenwand erforderlich, was einerseits das Volumen des Hohlraumes und somit die wärmedämmende Eigenschaft der Tür erhöht und andererseits flexiblere Herstellungsmethoden ermöglicht, z.B. Kombinationen von stoff- und formschlüssiger Verbindungen. Gemäß einer Ausführungsform ist vorgesehen, dass der Rahmen mit der Innenwand und/oder der Außenwand stoffschlüssig verbunden ist, insbesondere verklebt oder verschweißt ist. Zusätzlich kann der Rahmen mit der Innenwand und/oder der Außenwand auch formschlüssig verbunden sein. Zwar kann eine reine formschlüssige Verbindung keine ausreichend vakuumdichte Verbindung darstellen, die Fertigung kann jedoch durch einen zusätzlichen Formschluss verbessert werden. Außerdem kann ein zusätzlicher Formschluss z.B. durch ein seitliches Einfassen der Innenwand oder der Außenwand durch den Rahmen die Ränder der Innenwand oder der Außenwand vor Beschädigungen bei der Montage oder der Benutzung schützen.

Gemäß einer Ausführungsform ist vorgesehen, dass der Rahmen einteilig oder mehrteilig, insbesondere durch vier Extrusionsprofile und vier Eckabschlussteile, ausgebildet ist. Gemäß einer Ausführungsform ist vorgesehen, dass der Rahmen aus Kunststoff und/oder Metall gebildet ist. Zwar kann ein einteiliger, z.B. aus Kunststoff gebildeter, Rahmen relativ einfach in einem Arbeitsschritt, z.B. durch ein Spritzgußverfahren, hergestellt werden. Insbesondere bei der Herstellung von Türen mit unterschiedlichen Abmaßen ist eine mehrteilige Ausführung des Rahmens jedoch vorteilhaft. Möglich ist dabei, dass vier Extrusionsprofile aus Kunststoff mit vier Eckabschlussteilen aus Metall kombiniert werden. Dies bringt den Vorteil, dass mögliche Anschlüsse für die Türlagerung in den höher belastbaren Metallteilen integriert werden können. Insbesondere kann in mindestens einem Eckabschlussteil eine Lagerbuchse ausgebildet sein, die beispielsweise eine Sacklochbohrung aufweist. Vorzugsweise weisen alle vier Eckabschlussteile Lagerbuchsen auf, so dass ein einfacher Türanschlagwechsel begünstigt wird. Extrusionsprofile aus Metall oder Kunststoff können Hohlkammern zur besseren Wärmeisolation aufweisen.

Gemäß einer Ausführungsform ist vorgesehen, dass der Rahmen eine obere und/oder untere Türabschlussleiste ausbildet, insbesondere dass an einem horizontalen Abschnitt des Rahmens, gegebenenfalls an Eckabschlussteilen, eine Lagerbuchse ausgebildet ist. Die Lagerbuchse kann durch eine Bohrung, insbesondere Sacklochbohrung, gebildet werden, und bildet zusammen mit einem in der Lagerbuchse drehbar gelagerten Lagerzapfen ein Türlager. Neben der Möglichkeit die Lagerbuchse direkt im Rahmen auszubilden, kann der Rahmen auch eine, z.B. rechteckige Aufnahme, zum Einsetzen eines eine Lagerbuchse umfassenden Bauteiles aufweisen.

Indem der Rahmen bereits die Dichtungsanordnung trägt, kann dieser größer ausgeführt werden und dabei weitere Funktionen übernehmen. Gemäß einer Ausführungsform ist vorgesehen, dass an dem Rahmen ein Türgriff montiert ist oder dass durch den Rahmen ein Türgriff ausgebildet ist, insbesondere, dass der Rahmen eine Griffmulde bildet. Die Griffmulde kann bei einer montierten Tür an vertikalen und/oder horizontalen Rahmenbereichen ausgebildet sein. Vorzugsweise umfasst die Griffmulde bzw. die Griffmulden einen Hinterschnitt, um ein Eingreifen einer Hand beim Öffnen bzw. Schließen der Tür zu ermöglichen. Sofern der Türgriff an dem Rahmen ausgebildet ist, ist der Türgriff vorzugsweise einstückig und einmaterialig an dem Rahmen ausgebildet.

Vorzugsweise ist die in Richtung eines Benutzers gewandte Außenwand durch eine im Wesentlichen ebene Fläche gebildet, so dass sie entweder direkt als eine das Haushaltsgerät abschließende Wand dienen kann oder aber unkompliziert mit einer zusätzlichen Außenabschlusswand verbunden werden kann. Die einem Lagerraum zugewandte Innenwand hingegen kann z.B. auf eine maximale wärmedämmende Eigenschaft der Tür hin optimiert werden: So ist gemäß einer Ausführungsform vorgesehen, dass die Innenwand wannenförmig ausgebildet ist, mit von einem Wannenboden abstehenden Wänden, die vakuumdicht mit dem Rahmen verbunden sind. Eine derartige Form der Innenwand kann einfach, z.B. durch einen Tiefziehvorgang, erzeugt werden und indem die von dem Wannenboden abstehenden Wände mit dem Rahmen verbunden sind, entsteht eine große Verbindungsfläche und damit eine sichere vakuumdichte Verbindung. Wenn gemäß einer Ausführungsform vorgesehen ist, dass die Innenwand einen umlaufenden Flansch aufweist, der vakuumdicht mit dem Rahmen verbunden ist, kann die Verbindung von Rahmen und Innenwand auf einfache Weise durch eine senkrecht zur einer den Flansch umfassenden Ebene gerichtete Fügebewegung erfolgen.

Gemäß einer Ausführungsform ist vorgesehen, dass die Innenwand einen Kunststoff aufweisenden Mehrschichtaufbau besitzt. Der Mehrschichtaufbau besitzt zumindest eine Sperrschicht, die ein Eindringen von gasförmigen Stoffen, wie Sauerstoff, CO2 oder Wasserdampf, in den Hohlraum minimiert bzw. verhindert. Möglich ist selbstverständlich auch, dass die Außenwand einen derartigen Kunststoff aufweisenden Mehrschichtaufbau besitzt.

Insbesondere sofern die Außenwand keine die einbaufertige Tür abschließende Wand darstellt, kann gemäß einer Ausführungsform vorgesehen sein, dass die Außenwand durch eine mehrschichtige Folie gebildet wird. Insbesondere sofern die Außenwand hingegen eine die einbaufertige Tür abschließende Wand darstellt, kann vorgesehen werden, die Außenwand durch ein Metallblech gebildet ist. Das Metallblech, z.B. aus Edelstahl, kann mit einem Kunststoff umfassenden Rahmen z.B. verklebt oder durch ein Gußmaterial vergossen sein bzw. bei einem Metall umfassenden Rahmen z.B. verschweißt oder verlötet werden.

Insbesondere sofern die Außenwand eine das einbaufertige Tür abschließende Wand darstellt, kann vorgesehen werden, dass die Außenwand zumindest Längsseiten und/oder Querseiten des Rahmens seitlich umfasst. Es entsteht somit eine stabile Tür mit einem optisch hochwertigen Eindruck.

Vorzugsweise ist vorgesehen, dass die Dichtungsanordnung ausschließlich an dem Rahmen befestigt ist.

Ein erfindungsgemäßes Haushaltsgerät, insbesondere Haushaltskältegerät, umfasst einen Korpus mit einem Lagerraum, der von einer erfindungsgemäßen Tür gemäß der vorangegangen Beschreibung geöffnet und geschlossen werden kann.

Ausführungsbeispiele der vorliegenden Erfindung sind in den beigefügten Figuren dargestellt. Dabei zeigen
Fig. 1 eine perspektivische Darstellung eines Haushaltsgerät,
Fig. 2 eine perspektivische Ansicht einer erfindungsgemäßen Tür,
Fig. 3 eine Explosionsdarstellung der Tür nach Fig. 2,
Fig. 4 eine Schnittdarstellung entlang der Schnittlinie IV-IV in Fig. 2 und
Fig. 5 eine Detailansicht analog zu Fig. 4 aus verschiedenen Ausführungsbeispielen.

Gleiche oder funktionsgleiche Bauteile sind mit den gleichen Bezugszeichen versehen.

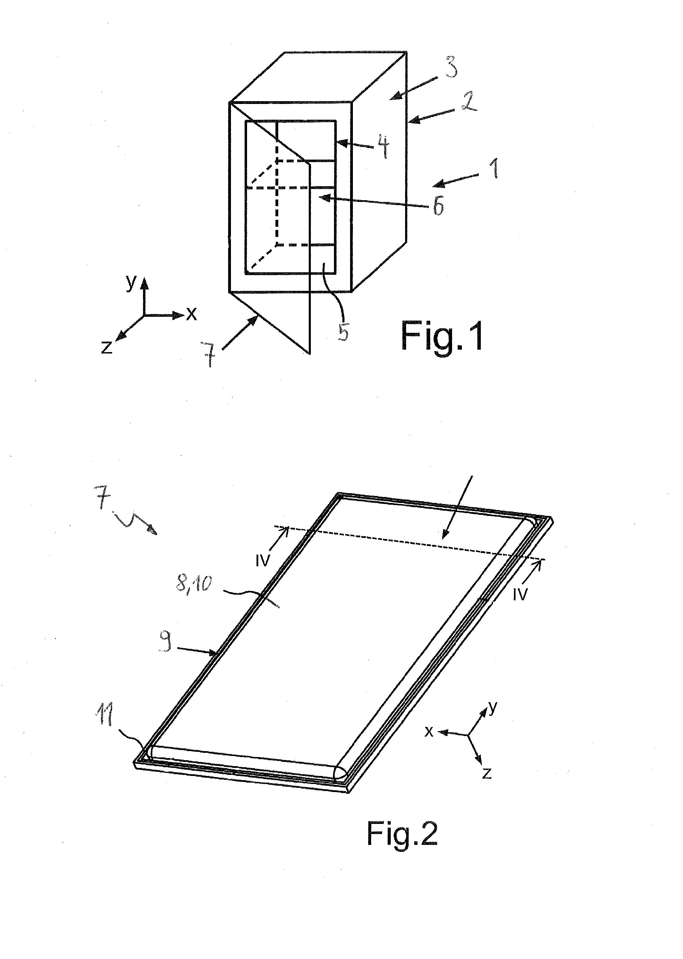

In Fig. 1 ist in einer perspektivischen Darstellung ein Haushaltsgerät 1, in Form eines Haushaltskältegerätes, gezeigt, welches zur Aufnahme von Lebensmitteln, wie beispielsweise Getränken und Speisen, ausgebildet ist. Das Haushaltskältegerät kann beispielsweise ein Kühlgerät oder ein Gefriergerät oder ein Kühl-Gefrier-Kombigerät sein.

Das Haushaltskältegerät umfasst einen Korpus 2, welcher ein Außengehäuse bzw. einem Außenbehälter 3 und ein darin angeordnetes Innengehäuse umfasst, welches ein Innenbehälter 4 ist. Der von dem Außenbehälter 3 umgebende Innenbehälter 4 bildet einen Lagerraum 5 mit einer frontseitigen Öffnung 6. Durch eine Tür 7 kann der Lagerraum 5 geöffnet und geschlossen werden.

In Fig. 2 ist in einer perspektivischen Ansicht eine erfindungsgemäße Tür 7 dargestellt, mit Blick auf die im montierten Zustand der Tür 7 dem Lagerraum 5 zugewandte und die Tür 7 abschließende Innenabschlusswand 8. Die Innenabschlusswand 8 bildet zusammen mit einem Rahmen 9 und einer in Fig. 2 nicht sichtbaren Außenwand der Tür einen evakuierten Hohlraum aus, d.h. die Innenabschlusswand 8 wird in diesem Ausführungsbeispiel durch die Innenwand 10 gebildet. Der Rahmen 9 weist eine Aufnahme in Form einer umlaufenden Nut 11 auf, um eine nicht dargestellte Dichtungsanordnung aufzunehmen. Der Rahmen 9 ist der Kontur der Tür 7 folgend rechteckig gestaltet.

Der Rahmen 9 ist darüber hinaus aus Kunststoff ausgebildet und insbesondere durch Spritzgussteile und extrudierte Hohlkammerprofile realisiert. Es kann vorgesehen sein, dass der Rahmen 9 aus einem einzigen Kunststoffmaterial oder aus zumindest zwei unterschiedlichen Kunststoffmaterialien ausgebildet ist.

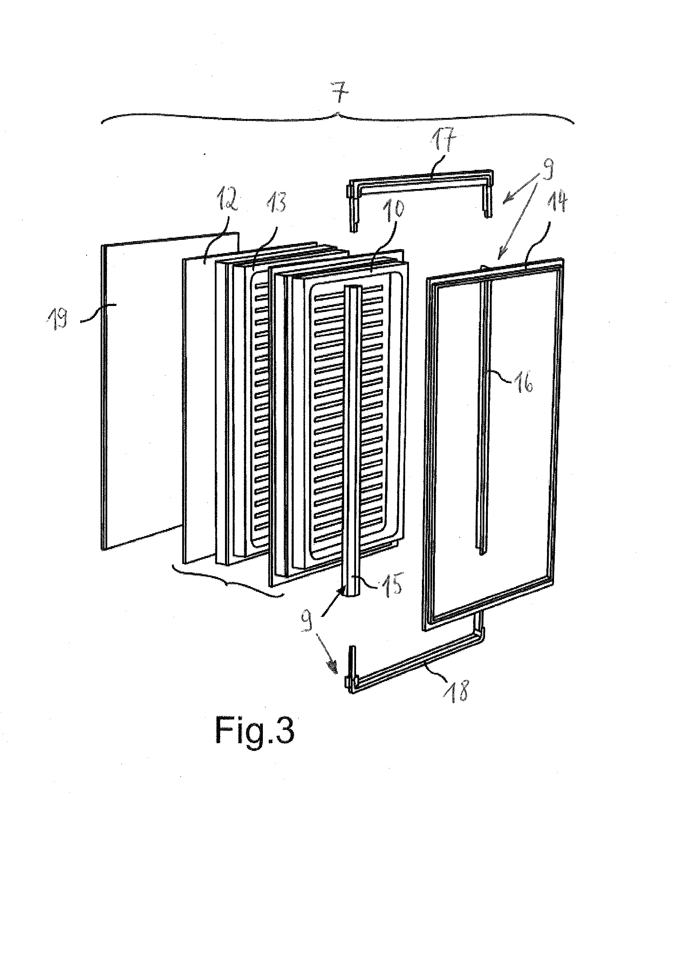

In Fig. 3 ist in einer Explosionsdarstellung der Tür 7 gezeigt.

Die thermische Isolation der Tür 7 beruht dabei im Wesentlichen auf einem evakuiertem Hohlraum, der durch eine mit dem Rahmen 9 vakuumdicht verbundene Außenwand 12 sowie eine mit dem Rahmen 9 vakuumdicht verbundene Innenwand 10 gebildet ist. Beispielsweise kann hier ein Verkleben oder Verschweißen vorgesehen sein. In dem Hohlraum ist ein Füllkörper bzw. Stützkörper 13 eingebracht. Beispielsweise kann hier ein poröser Festkörper vorgesehen sein. In bevorzugter Weise ist Kieselsäure als Füllmaterial vorgesehen. Während die Außenwand 12 durch eine mehrschichtige Folie gebildet ist, besteht die Innenwand 10 aus einem Kunststoff umfassenden Multilayermaterial. Sowohl Innenwand 10 als auch Außenwand 12 sind einstückig ausgebildet.

Darüber hinaus ist in Fig. 3 eine umlaufende Dichtungsanordnung 14 gezeigt, die im zusammengesetzten Zustand an dem Rahmen 9 in einer entsprechenden Aufnahme angeordnet ist. Der Rahmen 9 ist somit multifunktionell gestaltet und zur Aufnahme mehrerer unterschiedlicher separater gegenständlicher Komponenten vorgesehen. Neben der Dichtungsanordnung 14 kann darüber hinaus jedoch auch noch ein anderes Funktionsbauteil zusätzlich an dem Rahmen 9 angeordnet sein. Beispielsweise können hier ein Scharnier und/oder eine Lagereinheit und/oder ein Versteifungsteil vorgesehen sein.

Im Ausführungsbeispiel umfasst der Rahmen 9 durch seine rechteckige Formgebung vier Rahmenteile 15, 16, 17 und 18. Die beiden Rahmenteile 15 und 16, welche geradlinige längliche Bauteile sind, erstrecken sich vertikal und parallel. Ebenso erstrecken sich die horizontal angeordneten Rahmenteile 17 und 18 parallel zueinander.

Die Tür 7 umfasst darüber hinaus eine außenseitige bzw. frontseitige Außenabschlusswand 19, die beispielweise ein plattenartiges Außenblech ist. Die Innenabschlusswand 8 wird durch die Innenwand 10 gebildet.

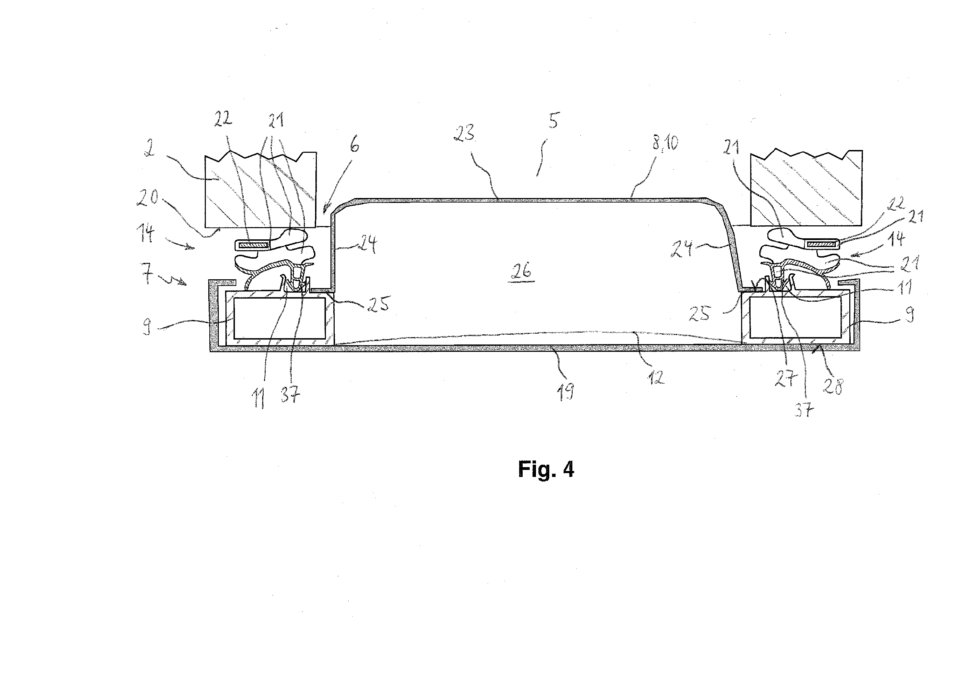

In Fig. 4 ist in einer Schnittdarstellung entlang der Schnittlinie IV-IV in Fig. 2 die geschlossene Tür 7 sowie ein Ausschnitt des Korpus 2 gezeigt.

Die Dichtungsanordnung 14 liegt an einem die Öffnung 6 umgebenden Korpusrahmen 20 des Korpus 2 an, dichtet also bei geschlossenem Tür 7 den Lagerraum 5 ab. Die Dichtungsanordnung 14 weist mehrere Hohlkammern 21 auf. In einer davon befindet sich ein Magnet 22, um einen sicheren Kontakt zwischen der Dichtungsanordnung 14 und dem Korpusrahmen 20 sicherzustellen.

Im gezeigten Ausführungsbeispiel kontaktiert die Dichtungsanordnung 14 ausschließlich den Rahmen 9 einerseits und den Korpusrahmen 20 andererseits. Dabei ist die Dichtungsanordnung 14 mittels eines Dichtungsfußes 37 in der Nut 11 befestigt. Im Rahmen der vorliegenden Erfindung kann jedoch auch zusätzlich ein Kontakt zwischen der Dichtungsanordnung 14 und der Innenwand 10 vorgesehen sein.

Die Innenwand 10 weist eine wannenförmige Form auf, mit von einem Wannenboden 23 abstehenden Wänden 24. An den Wänden 24 ist ein umlaufender Flansch 25 ausgebildet, mittels dessen die Innenwand 10 vakuumdicht mit dem Rahmen 9 verbunden ist. Der Wannenboden 23 ist dabei in Richtung des Lagerraumes 5 gewandt, so dass das Volumen eines evakuierten Hohlraumes 26 vergrößert werden kann. Die Innenwand 10 liegt mit ihrem Flansch 25 flächig auf einer Oberfläche 26 des Rahmens auf.

Die Außenwand 12 liegt flächig auf einer anderen Oberfläche 28 des Rahmens flächig auf und ist mit diesem vakuumdicht verbunden. Eine vakuumdichte Verbindung von Innenwand 10 und Außenwand 12 besteht nicht.

Die Außenabschlusswand 19 der Tür, also jene Wand, die bei montierter Tür 7 von einem Benutzer direkt sichtbar ist, wird durch ein Blechteil gebildet. Dieses ist an zwei vertikalen und/oder zwei horizontalen Rahmenbereichen um den Rahmen 9 gebogen, fasst diesen also formschlüssig ein. Zwischen dem Rahmen 9 und der Außenabschlusswand 19 kann eine Spielpassung vorliegen. Die Einheit von Innenwand 10, Außenwand 12 und Rahmen 9 kann also schwimmend in der Außenabschlusswand 19 gelagert sein. Grundsätzlich möglich ist jedoch auch, dass die Außenabschlusswand 19 stoffschlüssig, z.B. durch Kleben oder Schweißen, oder formschlüssig, z.B. durch Presspassung, mit der Einheit von Innenwand 10, Außenwand 12 und Rahmen 9 verbunden ist.

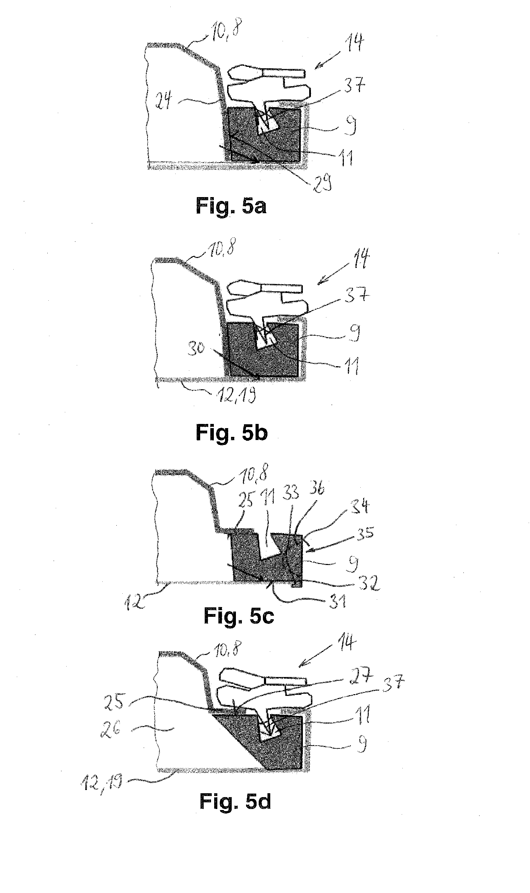

In Fig. 5 sind alternative Ausführungsbeispiele erfindungsgemäßer Türren 7 dargestellt, indem jeweils eine Detailansicht aus einer Fig. 4 entsprechenden Schnittdarstellung gezeigt sind.

In diesen Ausführungsbeispielen ist der Rahmen 9 einstückig ausgeführt und besteht aus Vollmaterial, z.B. einem Kunststoffspritzgußteil. Selbstverständlich könnte auch bei diesen Ausführungsbeispielen ein mehrteiliger, wie z.B. in Fig. 3 dargestellter, Rahmen 9 verwendet werden.

Fig. 5a zeigt ein Ausführungsbeispiel bei dem im Gegensatz zu Fig. 4 die Innenwand 10 keinen Flansch aufweist und eine vakuumdichte Verbindung von Innenwand 10 und Rahmen 9 über die Wände 24 erfolgt, genauer gesagt über nach außen gerichtete Oberflächen 29 der Wände 24. Wie im Vergleich mit Fig. 4 zu erkennen ist, entsteht dadurch eine größere Verbindungsfläche zwischen Innenwand 10 und Rahmen 9. Zwar ist es möglich, dass die wannenförmige Innenwand 10 an der Außenwand 12 anliegt. Eine vakuumdichte Verbindung zwischen Innenwand 10 und Außenwand 12 ist jedoch nicht vorhanden.

Fig. 5b unterscheidet sich von Fig. 5a dadurch, dass die Außenwand 12 der Tür 7 auch gleichzeitig die Außenabschlusswand 19 bildet. Die Außenwand 12 ist in diesem Fall aus einem Metallblech gebildet und umgreift den Rahmen 9 zumindest an zwei vertikalen und zwei horizontalen Rahmenstücken. Die Außenwand 12 ist an einer den Rahmen 9 kontaktierenden Verbindungsfläche 30 mit diesem vakuumdicht verbunden, z.B. verklebt.

Fig. 5c zeigt ein Ausführungsbeispiel, bei dem neben einer stoffschlüssigen und vakuumdichten Verbindung von Außenwand 12 und Rahmen 9 zusätzlich eine formschlüssige Verbindung vorliegt. Hierzu weist der Rahmen 9 an einer bezüglich des Hohlraumes 26 nach außen gewandten Oberfläche 31 eine Hinterschneidung 32 auf, die einen Rand 33 der Außenwand 12 formschlüssig umgreift. Neben einer erleichterten Montage wird dadurch ermöglicht, dass der Rahmen 9 frei liegende Außenrandflächen 34 aufweist. Diese können direkt zur Ausbildung eines Türgriffes 35 dienen. So kann z.B. eine Griffmulde 36 als Hinterschnitt in der Außenrandfläche 34 ausgebildet werden, der als Türgriff dient. Möglich wäre auch, einen separaten Türgriff direkt auf die Außenrandfläche 34 zu montieren, z.B. anzuschrauben.

Fig. 5d zeigt ebenfalls ein Ausführungsbeispiel, bei dem die Außenwand 12 gleichzeitig die Außenabschlusswand 19 bildet, jedoch ist im Unterschied zu Fig. 5b die Innenwand 10 ähnlich zu Fig. 4 mittels eines Flansches 25 auf einer Oberfläche 27 des Rahmens 9 vakuumdicht befestigt.

### BEZUGSZEICHENLISTE

- 1: Haushaltsgerät
- 2: Korpus
- 3: Außenbehälter
- 4: Innenbehälter
- 5: Lagerraum
- 6: Öffnung
- 7: Tür
- 8: Innenabschlusswand
- 9: Rahmen
- 10: Innenwand
- 11: Nut
- 12: Außenwand
- 13: Stützkörper
- 14: Dichtungsanordnung
- 15: Rahmenteil
- 16: Rahmenteil
- 17: Rahmenteil
- 18: Rahmenteil
- 19: Außenabschlusswand
- 20: Korpusrahmen
- 21: Hohlkammer
- 22: Magnet
- 23: Wannenboden
- 24: Wand
- 25: Flansch
- 26: Hohlraum
- 27: Oberfläche
- 28: Oberfläche
- 29: Oberfläche
- 30: Verbindungsfläche
- 31: Oberfläche
- 32: Hinterschneidung
- 33: Rand
- 34: Außenrandfläche
- 35: Türgriff
- 36: Griffmulde
- 37: Dichtungsfuß

## Patentansprüche

1. Tür (7) für ein Haushaltsgerät (1), insbesondere ein Haushaltskältegerät, aufweisend einen evakuierten Hohlraum (26), der durch eine Innenwand (10), eine Außenwand (12) sowie einen sowohl mit der Innenwand (10) als auch mit der Außenwand (12) vakuumdicht verbundenen Rahmen (9) gebildet ist, **dadurch gekennzeichnet, dass** an dem Rahmen (9) eine Dichtungsanordnung (14) angeordnet ist.

2. Tür (7) nach Anspruch 1, **dadurch gekennzeichnet, dass** der Rahmen (9) eine Aufnahme, insbesondere eine Nut (11), zum formschlüssigen und/oder kraftschlüssigen Aufnehmen der Dichtungsanordnung (14) aufweist.

3. Tür (7) nach Anspruch 2, **dadurch gekennzeichnet, dass** die Aufnahme als eine über den Rahmen (9) umlaufend geschlossene Nut (11) ausgebildet ist oder dass die Aufnahme durch mehrere separate, insbesondere zwei vertikal und zwei horizontal verlaufende, Nuten (11) gebildet ist.

4. Tür (7) nach einem der vorangegangen Ansprüche, **dadurch gekennzeichnet, dass** der Rahmen (9) mit der Innenwand (10) und/oder der Außenwand (12) stoffschlüssig verbunden ist, insbesondere verklebt oder verschweißt ist.

5. Tür (7) nach einem der vorangegangen Ansprüche, **dadurch gekennzeichnet, dass** der Rahmen (9) einteilig oder mehrteilig, insbesondere durch vier Extrusionsprofile und vier Eckabschlussteile, ausgebildet ist.

6. Tür (7) nach einem der vorangegangen Ansprüche, **dadurch gekennzeichnet, dass** der Rahmen (9) aus Kunststoff und/oder Metall gebildet ist.

7. Tür (7) nach einem der vorangegangen Ansprüche, **dadurch gekennzeichnet, dass** der Rahmen (9) eine obere und/oder untere Türabschlussleiste ausbildet, insbesondere dass an einem horizontalen Abschnitt des Rahmens eine Lagerbuchse ausgebildet ist.

8. Tür (7) nach einem der Ansprüche 1 bis 7, **dadurch gekennzeichnet, dass** an dem Rahmen (9) ein Türgriff montiert ist.

9. Tür (7) nach einem der Ansprüche 1 bis 7, **dadurch gekennzeichnet, dass** durch den Rahmen (9) ein Türgriff (35) ausgebildet ist, insbesondere, dass der Rahmen (9) eine Griffmulde (36) ausbildet

10. Tür (7) nach einem der vorangegangen Ansprüche, **dadurch gekennzeichnet, dass** die Innenwand (10) wannenförmig ausgebildet ist, mit von einem Wannenboden (23) abstehenden Wänden (24), die vakuumdicht mit dem Rahmen (9) verbunden sind.

11. Tür (7) nach einem der vorangegangen Ansprüche, **dadurch gekennzeichnet, dass** die Innenwand (10) einen umlaufenden Flansch (25) aufweist, der vakuumdicht mit dem Rahmen (9) verbunden ist.

12. Tür (7) nach einem der vorangegangen Ansprüche, **dadurch gekennzeichnet, dass** die Innenwand (10) einen Kunststoff aufweisenden Mehrschichtaufbau besitzt.

13. Tür (7) nach einem der vorangegangen Ansprüche, **dadurch gekennzeichnet, dass** die Außenwand (12) durch eine mehrschichtige Folie oder durch ein Metallblech gebildet ist.

14. Tür (7) nach einem der vorangegangen Ansprüche, **dadurch gekennzeichnet, dass** die Außenwand (12) zumindest Längsseiten und/oder Querseiten des Rahmens (9) seitlich umfasst.

15. Haushaltsgerät (1), insbesondere Haushaltskältegerät, umfassend einen Korpus (2) mit einem Lagerraum (5), der von einem Tür (7) nach einem der vorangegangen Ansprüche geöffnet und geschlossen werden kann.
